# EUROPÄISCHE PATENTSCHRIFT

(11) **EP 2 362 116 B1**
(45) Veröffentlichungstag und Bekanntmachung des Hinweises auf die Patenterteilung: **01.02.2017**
(21) Anmeldenummer: 10001642.7
(22) Anmeldetag: 18.02.2010
(51) Int. Cl.: F04B 9/02, F04B 43/02, F16H 55/18

(54) **Zahnrad sowie Pumpenaggregat mit einem solchen Zahnrad**
Gear wheel and pump aggregate with such a gear wheel
Roue dentée ainsi qu'agrégat de pompe doté d'une telle roue dentée

(43) Veröffentlichungstag der Anmeldung: 31.08.2011
(73) Patentinhaber: Grundfos Management A/S, 8850 Bjerringbro (DK)
(72) Erfinder: Gerz, Sergei, 76327 Pfinztal (DE); Müller, Klaus, 76185 Karlsruhe (DE); Haas, Ralf, 76327 Pfinztal (DE)
(74) Vertreter: Hemmer, Arnd

(56) Entgegenhaltungen:
- WO-A1-2006/108466
- DE-A1- 2 602 152
- DE-A1- 4 225 374
- DE-A1- 10 063 871
- GB-A- 833 273
- JP-A- 1 135 961
- JP-A- 10 246 314

## Beschreibung

Die Erfindung betrifft ein Dosierpumpenaggregat mit einem Antrieb, welcher ein Zahnradgetriebe mit einem Zahnrad aufweist.

In Dosierpumpenaggregaten sind Zahnradgetriebe bekannt, welche nicht eine kontinuierliche Antriebsbewegung übertragen, sondern schrittweise beispielsweise über einen Schrittmotor in Bewegung versetzt werden, um kontrolliert einzelne Förderhübe durchführen zu können. Es kommt somit in dem Getriebe zu Lastwechseln bzw. Momentenwechseln, welche aufgrund des Spiels zwischen den einzelnen Zahnrädern zu einer unerwünschten Geräuschentwicklung führen können. Um dies zu vermeiden, ist es in derartigen Dosierpumpenaggregaten bisher bekannt, ein Getriebe mit einem Zahnriemen einzusetzen, wobei der Zahnriemen als Dämpfungsglied im Getriebe dient. Dies hat jedoch den Nachteil, dass sich die Baugröße des Getriebes erhöht, darüber hinaus, eine Spanneinrichtung für den Zahnriemen vorgesehen sein muss und ein solcher Zahnriemen Verschleiß unterliegt.

Im Hinblick auf diese Problematik ist es Aufgabe der Erfindung, bei kompakter Baugröße den Aufbau eines Dosierpumpenaggregates mit einem Zahnradgetriebe zu ermöglichen, welches verschleißfest, einfach zu montieren ist und auch bei Lastwechseln keine unerwünschten Geräusche erzeugt.

Dokument GB 833273 A wird als nächstliegender Stand der Technik betrachtet und offenbart den Oberbegriff des Anspruchs 1.

Diese Aufgabe wird gelöst durch ein Dosierpumpenaggregat mit den in Anspruch 1 angegebenen Merkmalen. Bevorzugte Ausführungsformen ergeben sich aus den zugehörigen Unteransprüchen, der nachfolgenden Beschreibung sowie den beigefügten Figuren.

Die Erfindung betrifft ein Pumpenaggregat, welches als Dosierpumpenaggregat ausgebildet ist und einen Antriebsmotor und ein Zahnradgetriebe aufweist. Ein solches Pumpenaggregat kann beispielsweise ein Dosierpumpenaggregat sein, welches von einem elektrischen Schrittmotor zur Dosierung angetrieben wird. Der Schrittmotor kann über ein Zahnradgetriebe einen Exzenter und über diesen ein Pleuel antreiben, welches einen Verdrängerkörper, bevorzugt eine Membran zum Fördern bzw. Dosieren eines Mediums bewegt.

Das erfindungsgemäße Pumpenaggregat hat ein Zahnradgetriebe mit einem Zahnrad, welches eine spezielle Zahnausgestaltung aufweist, welche zum einen eine ausreichende Drehmomentübertragung ermöglicht und zum anderen einen spielfreien Eingriff mit einem kämmenden Zahnrad ermöglicht. Dazu ist zumindest ein Teil der Zähne, dessen Zähne vorzugsweise gleichmäßig über den Umfang des Zahnrades verteilt sind, in der nachfolgend beschriebenen Weise ausgebildet. Bevorzugt sind alle Zähne in dieser Weise ausgebildet.

Die Zähne weisen jeweils zumindest zwei Abschnitte auf, in welchen die Zahnkontur im Querschnitt unterschiedlich ausgebildet ist. So ist einer der Abschnitte vorrangig für die Drehmomentübertragung vorgesehen, während zumindest ein anderer Abschnitt dazu dient, das Spiel im Eingriff mit einem kämmenden Zahnrad zu eliminieren. Dazu weist zumindest ein erster Abschnitt des Zahnes im Querschnitt eine Außenkontur auf, welche in zumindest einem Teilbereich der Außenkontur gegenüber der Außenkontur eines angrenzenden zweiten Abschnittes des Zahnes vorsteht. Der Querschnitt erstreckt sich normal zur Längsachse des Zahnes, welche sich bei einer Gradverzahnung parallel zur Drehachse erstreckt. Es gibt somit in diesem ersten Abschnitt einen aus der Zahnkontur auskragenden Teil, so dass der Zahn in diesem Abschnitt im Querschnitt zumindest in einer Richtung größer ausgebildet ist, als der Querschnitt des angrenzenden zweiten Abschnittes. Darüber hinaus ist zumindest diese vorstehende Teilkontur des ersten Abschnittes elastisch ausgebildet und/oder elastisch gelagert. Dieser vorstehende bzw. auskragende Bereich der Außenkontur des ersten Abschnittes ist derart groß dimensioniert, dass er spielfrei mit einem kämmenden Zahnrad in Eingriff treten kann. Dabei wird im Eingriff mit dem kämmenden Zahnrad dieser elastische, vorstehende Bereich der Außenkontur des ersten Zahnabschnittes elastisch verformt, insbesondere komprimiert, so dass das in diesem Bereich in beiden Lastrichtungen des Eingriffes eine spielfreie Anlage zwischen diesem ersten Abschnitt des Zahnes und den Zahnflanken des kämmenden Zahnrades erreicht wird. Der zweite Abschnitt des Zahnes kann dagegen in herkömmlicher Weise zur Optimierung der Drehmomentübertragung ausgebildet sein und insbesondere aus einem ausreichend festen bzw. starren Material gefertigt sein, um auch die erforderliche Verschleißfestigkeit zu gewährleisten. Der zweiteAbschnitt kann das übliche Spiel im Eingriff mit einem kämmenden Zahnrad aufweisen, jedoch führt dieses dann nicht mehr zu den unerwünschten Geräuschen, da insgesamt das Spiel im Eingriff der beiden Zahnräder durch den ersten Abschnitt des Zahnes eliminiert wird.

Bevorzugt sind die Zähne jeweils derart ausgestaltet, dass der erste Abschnitt des Zahnes gegenüber dem angrenzenden zweiten Abschnitt des Zahnes radial auskragt und elastisch ausgebildet ist und/oder gelagert ist. D. h. bei dieser Ausführungsform weist das Zahnrad im ersten Abschnitt im entspannten Zustand der elastischen Bereiche einen größeren Teilkreisdurchmesser auf, als in dem angrenzenden zweiten Abschnitt. Beim Eingriff mit einem kämmenden Zahnrad wird der erste Abschnitt elastisch radial nach innen gefedert oder elastisch in radialer Richtung gestaucht, wodurch ein spielfreier Eingriff in diesem Bereich mit einem kämmenden Zahnrad sichergestellt wird. Auch bei einem Lastwechsel bzw. bei einer Lastumkehr kommt es somit zwischen den Zahnrädern nicht zu unerwünschten Geräuschen.

Der erste Abschnitt des Zahnes ist vorzugsweise jeweils an einem axialen Ende des Zahnes gelegen. Dabei ist die axiale Richtung bzw. die Längsrichtung die Erstreckungsrichtung des Zahnes quer zur Umfangsrichtung des Zahnrades, d. h. bei einer Gradverzahnung parallel zur Drehachse des Zahnrades, bei einer Schrägverzahnung erstreckt sich die Achse entsprechend schräg. Alternativ ist es auch möglich, entsprechend ausgebildete erste Abschnitte an beiden Axialenden des Zahnes vorzusehen.

Weiter bevorzugt sind die ersten Abschnitte mehrerer, vorzugsweise aller Zähne an einer gemeinsamen Umfangslinie des Zahnrades gelegen. D. h. die ersten Abschnitte der Zähne, in welchen die vorstehenden und elastisch gelagerten bzw. elastisch ausgebildeten Teile der Außenkontur vorhanden sind, sind bevorzugt alle in dergleichen Position in axialer Richtung gesehen gelegen. Auf diese Weise wird ein gleichmäßiger kontinuierlicher Eingriff mit einem kämmenden Zahnrad mit gleichmäßiger Krafteinleitung sichergestellt.

Der erste Abschnitt jedes Zahnes weist darüber hinaus bevorzugt eine schräg zur Drehachse des Zahnrades verlaufende Stirnkante auf. Insbesondere, wenn der Zahn in dem Bereich des ersten Abschnittes einen radial vorstehenden Abschnitt der Außenkontur aufweist, kann so über die schräg verlaufende Stirnkante ein stetiger Übergang von dem zweiten Abschnitt des Zahnes zu dem größten Kopfkreisdurchmesser des radial vorstehenden Bereiches des ersten Abschnittes des Zahnes geschaffen sein.

Erfindungsgemäß ist der erste Abschnitt der Zähne in radialer Richtung federnd mit dem angrenzenden zweiten Abschnitt des Zahnes verbunden. Durch diese federnde Verbindung kann die Elastizität erreicht werden, welche erforderlich ist, um die vorstehenden Bereiche der Außenkontur des ersten Abschnittes spielfrei mit den Zahnflanken eines kämmenden Zahnrades in Anlage halten zu können.

Um eine erforderliche Beweglichkeit der ersten Abschnitte der Zähne zu gewährleisten, kann der erste Abschnitt des Zahnes durch Schlitze von den ersten Abschnitten der angrenzenden Zähne getrennt sein. Insbesondere dann, wenn der erste Abschnitt des Zahnes elastisch mit dem angrenzenden zweiten Abschnitt verbunden ist, wird so erreicht, dass der erste Abschnitt unabhängig von den ersten Abschnitten der angrenzenden Zähne in radialer Richtung sich federnd bewegen kann, um spielfrei mit den Zahnflanken eines kämmenden Zahnrades zur Anlage zu kommen. Die ersten Abschnitte sind somit jeweils als federnde Zungen ausgebildet.

Ferner ist es bevorzugt, dass das Zahnrad im Bereich des ersten Abschnittes der Zähne eine geringere Wandstärke aufweist, als im Bereich des zweiten Abschnittes der Zähne. D. h. das Zahnrad kann im Bereich der ersten Abschnitte der Zähne im Inneren ausgedünnt sein, so dass hier die erforderliche elastische Bewegbarkeit der ersten Abschnitte der Zähne radial nach innen gewährleistet wird. Die ersten Abschnitte der Zähne können so radial nach innen einfedern.

Bevorzugt sind die Zähne und vorzugsweise das gesamt Zahnrad aus Kunststoff gefertigt. Dabei können die Zähne und das gesamte Zahnrad einteilig aus demselben Kunststoff gefertigt sein. Alternativ ist es auch möglich, unterschiedliche Kunststoffe miteinander zu verbinden, beispielsweise im Mehrkomponentenspritzguss. So könnten beispielsweise die ersten und zweiten Abschnitte der Zähne aus unterschiedlichen Kunststoffmaterialien gefertigt werden. So könnte der erste Abschnitt des Zahnes beispielsweise aus einem elastischen Kunststoff gefertigt werden und der zweite Abschnitt aus einem weniger elastischen Kunststoff gefertigt werden, um den ersten Abschnitt die erforderliche Elastizität und dem zweiten Abschnitt die erforderliche Steifigkeit zur Drehmomentübertragung zu geben.

Alternativ ist es auch möglich, dass der erste Abschnitt der Zähne aus Kunststoff und der zweite Abschnitt der Zähne aus Metall gefertigt ist. So kann durch Auswahl eines ausreichend elastischen Kunststoffes die erforderliche Federwirkung des ersten Abschnittes erreicht werden und der zweite Abschnitt aus Metall weist die erforderliche Steifigkeit zur Drehmomentübertragung aus. Eine solche Verbindung von Kunststoff und Metall kann beispielsweise form- und/oder kraftschlüssig oder auch dadurch geschehen, dass ein Kunststoffmaterial im Spritzguss mit den Metallteilen verbunden wird.

Der erste Abschnitt der Zähne erstreckt sich bevorzugt im Wesentlichen über einen Bereich von 10 bis 30 % der Zahnbreite, weiter bevorzugt im Wesentlichen über 20 % der Zahnbreite. So nimmt der zweite Abschnitt den größten Teil der Zahnbreite ein, so dass der größte Bereich des Zahnes der Drehmomentübertragung dient und nur ein kleinerer Teil dazu dient, einen spielfreien Eingriff mit einem kämmenden Zahnrad zu gewährleisten.

Das Zahnradgetriebe kann im einfachsten Fall aus einem Abtriebsritzel an der Welle des Antriebsmotors und einem kämmenden Zahnrad, welches auf einer Welle mit dem beschriebenen Exzenter liegt, bestehen. Dabei ist dieses kämmende Zahnrad gemäß der vorangehenden Beschreibung ausgebildet. Wenn es sich bei dem Antriebsmotor um einen Schrittmotor handelt, kommt es aufgrund der schrittweisen Drehung zu Lastwechseln bzw. zu Änderungen der Momentenrichtung zwischen dem Abtriebsritzel und dem kämmenden Zahnrad. Aufgrund des spielfreien Eingriffes des Zahnrades mit den ersten Abschnitten der Zähne in die Zahnung des Abtriebsritzels wird dabei ein Schlagen der Zahnflanken aneinander unterbunden, so dass ein ruhiger verschleißfreier Lauf auch bei nicht kontinuierlicher Drehung des Antriebsmotors gewährleistet wird.

Das Zahnrad mit den ersten und zweiten Abschnitten der Zähne treibt, wie beschrieben, bevorzugt einen Exzenter zur Bewegung eines Verdrängerkörpers drehend an. Dabei muss dieser Antrieb jedoch nicht dadurch erfolgen, dass das Zahnrad und der Exzenter auf einer gemeinsamen Welle angeordnet sind. Vielmehr kann der Antrieb auch indirekt beispielsweise über weitere Getriebeelemente bzw. Zahnräder erfolgen.

Nachfolgend wird die Erfindung beispielhaft anhand der beigefügten Figuren beschrieben. In diesen zeigt:
- Fig. 1: eine Schnittansicht eines Dosierpumpenaggregates mit einem Getriebe, in welchem ein erfindungsgemäßes Zahnrad angeordnet ist, und

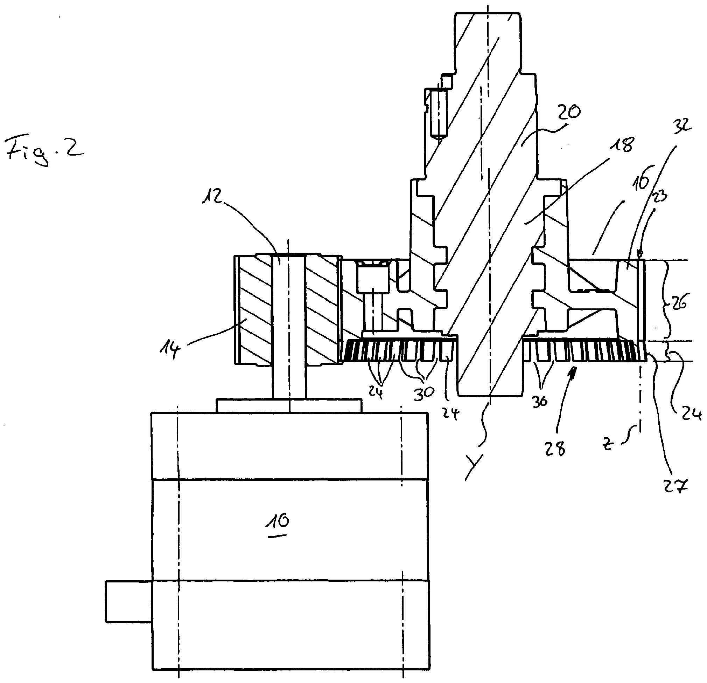

- Fig. 2: in einer vergrößerten Ansicht den Antrieb und die ineinander eingreifenden Zahnräder des Getriebes gemäß Fig. 1.

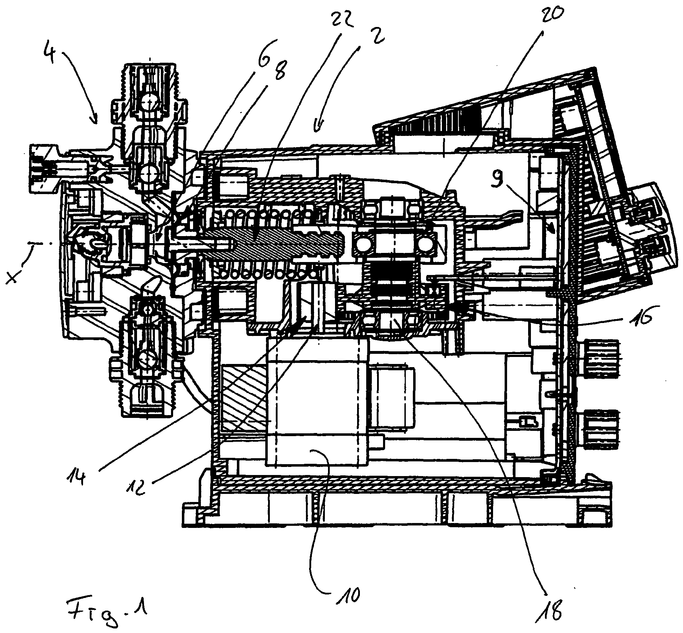

Das in Fig. 1 beispielhaft gezeigte Dosierpumpenaggregat weist in bekannter Weise ein Antriebsgehäuse 2 mit einem daran angesetzten Pumpenkopf 4 auf. In dem Pumpenkopf 4 ist ein Dosierraum 6 mit den zugehörigen Leitungsanschlüssen und Ventilen angeordnet. Der Dosierraum 6 wird an einer Seite von einer Membran 8 begrenzt, welche den

Verdrängerkörper bildet, durch welchen das Volumen des Dosierraumes zum Pumpen bzw. Fördern eines Mediums verkleinert und erweitert werden kann.

In dem Antriebsgehäuse 2 ist neben dem eigentlichen Antrieb die erforderliche Steuer- bzw. Regelelektronik 9 in bekannter Weise angeordnet. Der Antrieb weist einen elektrischen Antriebsmotor 10 auf, welcher bevorzugt als Schrittmotor ausgebildet ist. Auf der Motorwelle 12 ist ein Abtriebsritzel bzw. Ritzel 14 drehfest angebracht. Das Ritzel 14 kämmt mit einem Zahnrad 16, welches über eine Welle 18, auf welcher das Zahnrad 16 drehfest befestigt ist, einen Exzenter 20 drehend antreibt. Über den Exzenter 20 wird ein Pleuel 22 in axiale oszillierende Bewegung entlang der Hub- bzw. Längsachse X versetzt. Das Pleuel 22 verursacht somit die zum Fördern bzw. Dosieren erforderlichen Hubbewegungen der Membran 8.

Bei der Ausgestaltung des Antriebsmotors 10 als Schrittmotor stellt sich das Problem, dass es keine kontinuierlich rotierende Bewegung der Motorwelle 12 gibt, sondern ein Drehen in einer Vielzahl von Einzelschritten. Diese verursachen in dem von dem Ritzel 14 und dem Zahnrad 16 gebildeten Getriebe Last- bzw. Momentenwechsel, welche aufgrund des Spiels zwischen den Zähnen des Ritzels 14 und dem Zahnrad 16 zu unerwünschten Geräuschen und einem erhöhten Zahnverschleiß führen können. Um dies zu vermeiden, ist das Zahnrad 16 in der erfindungsgemäßen Weise derart ausgestaltet, dass es spielfrei mit dem Ritzel 14 in Eingriff ist. Die Zähne 23 des Zahnrades 16 weisen dazu jeweils einen ersten Abschnitt 24 und einen in Längsrichtung Z des Zahnes 23 angrenzenden zweiten Abschnitt 26 auf. In dem zweiten Abschnitt 26 sind die Zähne 23 in herkömmlicher Weise mit dem gewünschten Zahnprofil zur Drehmomentübertragung ausgebildet. Im ersten Abschnitt 24 der Zähen 23 ist das Zahnprofil so ausgebildet, dass zumindest ein Teil der Außenkontur im Querschnitt quer zur Längsachse Z des Zahnes gegenüber der Außenkontur eines Querschnitts im zweiten Abschnitt 26 auskragt. Darüber hinaus ist dieser auskragende Bereich elastisch ausgebildet, so dass er vollständig an den Zahnflanken des Ritzels 14 spielfrei zur Anlage kommen kann. Die ersten Abschnitte 24 der Zähne 23 liegen alle an derselben Axialseite des Zahnrades 16 am axialen Ende der Zähne 23.

Die auskragende Außenkontur ist im vorliegenden Beispiel dadurch erreicht, dass der Zahn 23 in seinem ersten Abschnitt 24 radial nach außen auskragt und somit in diesem Bereich einen größeren Teil- und Kopfkreisdurchmesser, als in dem zweiten Abschnitt 26 aufweist. Dabei stehen die ersten Abschnitte 24 mit ihrer Stirnkante 27 schräg zur Zahnlängsachse Z nach außen vor, d. h. im ersten Abschnitt 24 weist der Zahn an seinem an den zweiten Abschnitt 26 angrenzenden Bereich denselben Teil- bzw. Kopfkreisdurchmesser auf, wie der Zahn 23 im zweiten Abschnitt 26. Ausgehend von dem Übergang zu dem zweiten Abschnitt 26 erstreckt sich der Zahn 23 im ersten Abschnitt 24 zu der Axialseite 28 des Zahnrades 16 radial bezogen auf die Drehachse Y des Zahnrades 16 nach außen. D. h. der Teilkreisdurchmesser nimmt zur Axialseite 28 hin zu, so dass der erste Abschnitt 24 radial gegenüber dem zweiten Abschnitt 26 vorsteht.

Die ersten Abschnitte 24 der Zähne 23 sind mit den jeweils angrenzenden zweiten Abschnitten 26 elastisch verbunden. Die elastische Ausgestaltung der ersten Abschnitte 24 erfolgt in erster Linie durch Ausdünnen des Materials. So sind zwischen den ersten Abschnitten 24 der einzelnen Zähne 23 Schlitze 30 angeordnet, so dass die ersten Abschnitte 24 der Zähne 23 federnde Zungen bilden und jeweils unabhängig voneinander radial bezogen auf die Drehachse Y nach innen federn können. Darüber hinaus ist das Zahnrad 16 im Bereich der ersten Abschnitte 24 am Innenumfang ausgedünnt. D. h. in diesem Bereich werden die Zähne 23 am Innenumfang weniger unterstützt als im Bereich des zweiten Abschnittes 26. In dem zweiten Abschnitt 26 sind die Zähne 23 radial innenliegend der Zahnfüße durch einen tragenden Ring 32 unterstützt.

Im gezeigten Beispiel ist das gesamte Zahnrad 16 einstückig vorzugsweise aus Kunststoff ausgebildet. Dadurch wird die erforderliche Elastizität der ersten Abschnitte 24 der Zähne 23 in radialer Richtung sichergestellt. Die ersten Abschnitte 24 der Zähne 23 werden beim Eingriff mit den Zähnen 23 des Ritzels 14 um ein gewisses Maß radial nach innen gedrückt, wodurch sichergestellt wird, dass beide Seitenflanken der Zähne 23 in dem ersten Abschnitt 24 spielfrei mit den Zahnflanken des Ritzels 14 in Anlage sind. Die eigentliche Drehmomentübertragung zwischen Ritzel 14 und Zahnrad 16 erfolgt jedoch weiterhin über die konventionelle Zahngestaltung im zweiten Abschnitt 26 der Zähne 23, in welchem das herkömmlicherweise vorhandene Spiel weiterhin vorhanden ist. Die ersten Abschnitte 24 der Zähne 23 haben somit eine Feder- bzw. Dämpfungsfunktion in dem Zahnradgetriebe, welche unerwünschte Geräusche eliminiert. Der erste Abschnitt 24 stellt nur einen geringen Bereich der Zahnbreite in Richtung der Zahnlängsachse Z dar, im vorliegenden Fall ca. 20 % der Zahnbreite, wodurch der größte Teil der Zahnbreite im zweiten Bereich 26 zur Kraftübertragung genutzt werden kann.

Im gezeigten Beispiel ist das Zahnrad 16 einstückig aus Kunststoffmaterial ausgebildet. Es ist jedoch zu verstehen, dass das Zahnrad 16 auch aus verschiedenen Materialien, insbesondere auch aus verschiedenen Kunststoffen, beispielsweise im Mehrkomponentenspritzguss, gefertigt sein könnte. So könnten die Zähne 23 im ersten Abschnitt 24 aus einem anderen, insbesondere elastischeren, Material gefertigt sein, als der Teil der Zähne 23 im zweiten Abschnitt 26. Auch wäre es denkbar, die Zähne im zweiten Abschnitt 26 aus Metall auszubilden und nur im ersten Bereich 24 aus Kunststoff. Auch könnten in einem mehrstufigen Getriebe mehrere nach Art des Zahnrades 16 ausgebildete Zahnräder Verwendung finden.

### Bezugszeichenliste

- 2 -: Antriebsgehäuse
- 4 -: Pumpenkopf
- 6 -: Dosierraum
- 8 -: Membran
- 9 -: Elektronik
- 10 -: Antriebsmotor
- 12 -: Motorwelle
- 14 -: Ritzel
- 16 -: Zahnrad
- 18 -: Welle
- 20 -: Exzenter
- 22 -: Pleuel
- 23 -: Zähne
- 24 -: erster Abschnitt der Zähne
- 26 -: zweiter Abschnitt der Zähne
- 27 -: Stirn kante
- 28 -: Axialseite des Zahnrades 16
- 30 -: Schlitze
- 32 -: tragender Ring
- X -: Hubrichtung
- Y -: Drehachse des Zahnrades 16
- Z -: Längsachse der Zähne 32

## Patentansprüche

1. Dosierpumpenaggregat mit einem Antrieb, welcher einen Antriebsmotor (10) und ein Zahnradgetriebe aufweist, wobei das Zahnradgetriebe ein Zahnrad (16) mit Zähnen (23) aufweist, **dadurch gekennzeichnet, dass** bei den Zähnen (23) zumindest jeweils ein erster Abschnitt (24) des Zahnes (23) im Querschnitt eine Außenkontur aufweist, welche in zumindest einem Teilbereich der Außenkontur gegenüber der Außenkontur eines angrenzenden zweiten Abschnittes (26) des Zahnes (23) vorsteht, wobei der erste Abschnitt elastisch ausgebildet und gelagert ist, und wobei er in radialer Richtung federnd mit dem angrenzenden zweiten Abschnitt (26) des Zahnes (23) verbunden ist.

2. Dosierpumpenaggregat nach Anspruch 1, **dadurch gekennzeichnet, dass** die Zähne (23) jeweils derart ausgestaltet sind, dass der erste Abschnitt (24) des Zahnes (23) gegenüber dem angrenzenden zweiten Abschnitt (26) des Zahnes (23) radial auskragt und elastisch ausgebildet und/oder gelagert ist.

3. Dosierpumpenaggregat nach Anspruch 1 oder 2, **dadurch gekennzeichnet, dass** der erste Abschnitt (24) des Zahnes (23) jeweils an einem axialen Ende (28) des Zahnes (23) gelegen ist.

4. Dosierpumpenaggregat nach einem der vorangehenden Ansprüche, **dadurch gekennzeichnet, dass** die ersten Abschnitte (24) mehrerer, vorzugsweise aller Zähne (23) an einer gemeinsamen Umfangslinie des Zahnrades (16) gelegen sind.

5. Dosierpumpenaggregat nach einem der vorangehenden Ansprüche, **dadurch gekennzeichnet, dass** der erste Abschnitt (24) jedes Zahns (23) eine schräg zur Drehachse (Y) des Zahnrades (16) verlaufende Stirnkante aufweist.

6. Dosierpumpenaggregat nach einem der vorangehenden Ansprüche, **dadurch gekennzeichnet, dass** der erste Abschnitt (24) eines Zahnes (23) durch Schlitze (30) von den ersten Abschnitten (24) der angrenzenden Zähne (23) getrennt ist.

7. Dosierpumpenaggregat nach einem der vorangehenden Ansprüche, **dadurch gekennzeichnet, dass** es im Bereich der ersten Abschnitte (24) der Zähne (23) in radialer Richtung eine geringere Wandstärke aufweist, als im Bereich der zweiten Abschnitte (26) der Zähne (23).

8. Dosierpumpenaggregat nach einem der vorangehenden Ansprüche, **dadurch gekennzeichnet, dass** die Zähne (23) und vorzugsweise das gesamte Zahnrad (16) aus Kunststoff gefertigt sind.

9. Dosierpumpenaggregat nach einem der Ansprüche 1 bis 7, **dadurch gekennzeichnet, dass** jeweils der erste Abschnitt (24) der Zähne (23) aus Kunststoff und der zweite Abschnitt (26) der Zähne (23) aus Metall gefertigt ist.

10. Dosierpumpenaggregat nach einem der vorangehenden Ansprüche, **dadurch gekennzeichnet, dass** der erste Abschnitt (24) sich über einen Bereich von 10 bis 30 % der Zahnbreite erstreckt.

11. Dosierpumpenaggregat nach einem der vorangehenden Ansprüche, **dadurch gekennzeichnet, dass** das Zahnrad (16), welches die Zähne (23) mit den ersten (24) und zweiten (26) Abschnitten aufweist, mit einem Ritzel (14) auf der Welle (12) des Antriebsmotors (10) kämmt.

12. Dosierpumpenaggregat nach einem der vorangehenden Ansprüche, **dadurch gekennzeichnet, dass** das Zahnrad (16) mit den ersten (24) und zweiten (26) Abschnitten der Zähne (23) einen Exzenter (20) zur Bewegung eines Verdrängerkörpers (8) drehend antreibt.

13. Dosierpumpenaggregat nach einem der vorangehenden Ansprüche, **dadurch gekennzeichnet, dass** der Antriebsmotor (10) ein Schrittmotor ist.

## Claims

1. A metering pump assembly with a drive which comprises a drive motor (10) and a gearwheel transmission, wherein the gearwheel transmission comprises a gearwheel (16) with teeth (23), **characterised in that** with regard to the teeth (23), in each case at least one first section (24) of the tooth (23) in cross section has an outer contour which in at least a part-region of the outer contour projects with respect to the outer contour of an adjacent second section (26) of the tooth (23), wherein the first section is elastically designed and mounted, and wherein it is resiliently connected to the adjacent second section (26) of the tooth (23), in the radial direction.

2. A metering pump assembly according to claim 1, **characterised in that** the teeth (23) are each designed in a manner such that the first section (24) of the tooth (23) projects radially with respect to the adjacent second section (26) of the tooth (23) and is designed and/or mounted in an elastic manner.

3. A metering pump assembly according to claim 1 or 2, **characterised in that** the first section (24) of the tooth (23) is situated in each case at an axial end (28) of the tooth (23).

4. A metering pump assembly according to one of the preceding claims, **characterised in that** the first sections (24) of several, preferably of all teeth (23) are situated on a common peripheral line of the gearwheel (16).

5. A metering pump assembly according to one of the preceding claims, **characterised in that** the first section (24) of each tooth (23) has a face edge which runs obliquely to the rotation axis (Y) of the gearwheel (16).

6. A metering pump assembly according to one of the preceding claims, **characterised in that** the first section (24) of a tooth (23) is separated from the first sections (24) of the adjacent teeth (23) by way of slots (30).

7. A metering pump assembly according to one of the preceding claims, **characterised in that** in the radial direction, it has a smaller wall thickness in the region of the first sections (24) of the teeth (23) than in the region of the second sections (26) of the teeth (23).

8. A metering pump assembly according to one of the preceding claims, **characterised in that** the teeth (23) and preferably the complete gearwheel (16) are manufactured of plastic.

9. A metering pump assembly according to one of the claims 1 to 7, **characterised in that** in each case the first section (24) of the teeth (23) are manufactured of plastic and the second section (26) of the teeth (23) are manufactured of metal.

10. A metering pump assembly according to one of the preceding claims, **characterised in that** the first section (24) extends over a region of 10 to 30% of the tooth width.

11. A metering pump assembly according to one of the preceding claims, **characterised in that** the gearwheel (16) which comprises the teeth (23) with the first (24) and second (26) sections meshes with a pinion (14) on the shaft (12) of the drive motor (10).

12. A metering pump assembly according to one of the preceding claims, **characterised in that** the gearwheel (16) with the first (24) and second (26) sections of the teeth (23) drive an eccentric (20) for moving a displacement body (8) in rotation.

13. A metering pump assembly according to one of the preceding claims, **characterised in that** the drive motor (10) is a stepper motor.

## Revendications

1. Agrégat de pompe de dosage avec un entraînement qui comprend un moteur d'entraînement (10) et une transmission à roues dentées, la transmission à roues dentées comportant une roue dentée (16) avec des dents (23),
**caractérisé en ce que**, sur chacune des dents (23), au moins une première partie (24) de la dent (23) présente en coupe transversale un contour extérieur qui, au moins dans une zone partielle du contour extérieur, dépasse par rapport au contour extérieur d'une deuxième partie adjacente (26) de la dent (23), la première partie étant formée et montée de manière élastique et étant attachée à la deuxième partie adjacente (26) de la dent (23) de manière résiliente en direction radiale.

2. Agrégat de pompe de dosage selon la revendication 1, **caractérisé en ce que** les dents (23) sont formées chacune de façon que la première partie (24) de la dent (23) est en saillie radialement par rapport à la deuxième partie (26) adjacente de la dent (23) et est formée et/ou montée de manière élastique.

3. Agrégat de pompe de dosage selon la revendication 1 ou 2, **caractérisé en ce que** la première partie (24) de la dent (23) respective est disposée à une extrémité axiale (28) de la dent (23).

4. Agrégat de pompe de dosage selon l'une des revendications précédentes, **caractérisé en ce que** les premières parties (24) de plusieurs, de préférence de toutes les dents (23) sont disposées sur une ligne commune de circonférence de la roue dentée (16).

5. Agrégat de pompe de dosage selon l'une des revendications précédentes, **caractérisé en ce que** la première partie (24) de chaque dent (23) comprend un bord avant oblique par rapport à l'axe de rotation (Y) de la roue dentée (16).

6. Agrégat de pompe de dosage selon l'une des revendications précédentes, **caractérisé en ce que** la première partie (24) d'une dent (23) est séparée des premières parties (24) des dents adjacentes (23) par des fentes (30).

7. Agrégat de pompe de dosage selon l'une des revendications précédentes, **caractérisé en ce qu'**il présente, en direction radiale, dans la zone des premières parties (24) des dents (23) une épaisseur de paroi moindre que dans la zone des deuxièmes parties (26) des dents (23).

8. Agrégat de pompe de dosage selon l'une des revendications précédentes, **caractérisé en ce que** les dents (23), et de préférence la roue dentée entière (16), sont réalisées en matière synthétique.

9. Agrégat de pompe de dosage selon l'une des revendications 1 à 7, **caractérisé en ce que** la première partie respective (24) des dents (23) est réalisée en matière synthétique et la deuxième partie respective (26) des dents (23) en métal.

10. Agrégat de pompe de dosage selon l'une des revendications précédentes, **caractérisé en ce que** la première partie (24) s'étend sur une zone de 10 à 30 % de la largeur de dent.

11. Agrégat de pompe de dosage selon l'une des revendications précédentes, **caractérisé en ce que** la roue dentée (16) qui comprend les dents (23) ayant les première (24) et deuxième (26) parties, engrène avec un pignon (14) situé sur l'arbre (12) du moteur d'entraînement (10).

12. Agrégat de pompe de dosage selon l'une des revendications précédentes, **caractérisé en ce que** la roue dentée (16) qui comprend les dents (23) ayant les première (24) et deuxième (26) parties, entraîne un excentrique (20) pour le déplacement d'un corps de refoulement (8) en rotation.

13. Agrégat de pompe de dosage selon l'une des revendications précédentes, **caractérisé en ce que** le moteur d'entraînement (10) est un moteur pas-à-pas.
